# EUROPEAN PATENT APPLICATION

(11) **EP 4 625 525 A1**
(43) Date of publication of application: **01.10.2025**
(21) Application number: 24166621.3
(22) Date of filing: 27.03.2024
(51) Int. Cl.: H01M 4/134, H01M 4/1395, H01M 4/36, H01M 4/38, H01M 4/62, H01M 10/0525

(54) **COATED ANODE ELECTRODE WITH METAL COMPOUND AND ORGANIC BINDER**

(71) Applicant: Evonik Operations GmbH, 45128 Essen (DE)
(72) Inventor: Takata, Ryo, 200233 Shanghai (CN); Dehe, Daniel, 63486 Bruchköbel (DE); Esken, Daniel, 63526 Erlensee (DE); Schmidt, Franz, 64521 Groß-Gerau (DE); Alarcon, Carlos, 63450 Hanau (DE); Fang, Chia-Chen, Taipei City 106 (TW); Wu, Nae-Lih, Taipei 1036 (TW); Lin, Chu-Chun, 220439 New Taipeh City (TW)
(74) Representative: Evonik Patent Association

(57) **Abstract**

The invention provides an anode electrode for a lithium ion battery, containing an anode electrode containing at least 7 wt.-% silicon and a coating layer comprising 5-80 wt.% of an organic binder and 20-95 wt.% of a metal compound selected from the group consisting of unmodified or surface modified pyrogenic aluminum oxide, unmodified or surface modified pyrogenic magnesium oxide or unmodified or surface modified pyrogenic silicon oxide particles and mixtures thereof, wherein the metal compound consists of aggregates of primary particles with a number mean primary particle size d50 of 5 nm - 100 nm.

## Description

### Field of invention

Silicon (Si) has several favorable properties for being a promising anode material in lithium ion batteries (LIBs), including a substantially high theoretical specific capacity of 3579 mAh/g (for Li₁₅Si₄) and a relatively low discharge potential (nearly 0.4 V vs. Li+/Li), and it is an abundant resource. However, the main challenge is its significant volume changes (over 300%) during charge and discharge, which results in pulverization of Si particles, delamination of an electrode, and continuous formation of the solid-electrolyte interphase (SEI) layers, leading to poor cycle life. In addition, the inherent low conductivity of Si causes poor electrochemical performance. Composite anodes consisting of graphite and Si/SiO have been considered promising alternatives. In this combination, graphite can buffer the volume expansion of Si for maintaining the structural integrity of the electrode and provide a good electronically conductive matrix, while Si increases the specific capacity. Even though only a small weight percentage (<10 wt.%) of Si is typically added to graphite, it remains a challenge to maintain a sufficiently long cycle life for a Si-graphite composite anode in practical applications.

### Prior art

Andersen et al. describe in Scientific Reports, 9, Article number: 14814 (2019), Silicon-carbon composite anode active materials used in lithium ion batteries to improve bonding properties of binder to silicon particles.

Yu et al. describe in Nano Lett. 2019, 19, 8, 5124-5132, a protective layer of silicon carbide to stabilize Si based anodes to increase energy density and to improve cycle performance of Si based anode active materials in lithium ion battery.

Wang et al. describe in Carbon Energy, Volume 1, Issue 2, Dec 2019, Pages i, 135-288, several protective layer with inorganic and/or organic material on surface of Si based anode active materials in lithium ion batteries.

### Problem and solution

Casino et al. describe in Journal of Energy Storage 44 (2021) 103479, thin Al₂O₃ protective coating on silicon thin film electrodes by reactive sputtering technique, however the technique has an issue on practical application of mass production of lithium ion battery with high content of Si anode active material.

CN103035940A discloses a coating layer either on cathode or anode electrode with the thickness of 15 -30 µm and the material component of the coating layer includes 88 wt.% to 95 wt.% of inorganic powder material and 5 wt.% to 12 wt.% of binder and dispersant. The particle size of the inorganic powder material is a nanoscale inorganic metal oxide or porous structure powder material with a particle size of 500 nm to 8 µm, however the thickness of the coating layer is too thick and the anode active material does not contain Si based material to obtain high energy lithium ion batteries.

CN112574659A discloses a protective layer for lithium secondary battery electrode sheets, wherein the protective layer is mixed with organic polymers, lithium salts, and nanometal oxides to form a mixed solution, and is then coated on the outside of the slurry layer of the cathode electrode sheet and the anode electrode sheet respectively, forming a protective layer after baking. The metal oxide is one or mixture of TiO₂, SiO₂, Al₂O₃, ZnO, ZrO₂, SnOz. The particle size of the metal oxide is between 10 nm and 1000 nm. The coating process needs to be carried out at low dew point environment because lithium salt is contained in the coating solution and it reacts with chemically moisture in air.

Importantly, the physicochemical properties of such protecting inorganic particles, such as the kind of particles, their particle size, particle size distribution, aggregation and agglomeration, surface of particles as well as the content of such particles used for protection of the electrode, are of paramount importance for providing chemical stability of the silicon containing anode electrode during the cycling of lithium ion batteries.

The problem addressed by the present invention is that of providing modified electrode for lithium ion batteries, especially for lithium ion batteries comprising more than 7 wt.% silicon in anode active material in anode electrode. Such modified electrode should provide a higher cycling stability than that of the unmodified materials.

In the course of thorough experimentation, it was surprisingly found that the combination of organic binders with unmodified or surface modified pyrogenic oxide particles of aluminum, magnesium, silicon, zirconium, zinc, calcium or tin may be particularly suitable for coating of anode electrodes containing more than 7% Si in anode active material for the lithium-ion batteries.

The invention provides an anode electrode for a lithium ion battery, containing an anode electrode material containing at least 7 wt.-% silicon, and a coating layer comprising 5-80 wt.% of an organic binder and 20-95 wt.% of a metal compound selected from the group consisting of unmodified or surface modified pyrogenic oxide particles of aluminum, magnesium, silicon, zirconium, zinc, calcium or tin, preferably is the metal compound selected from the group consisting of unmodified or surface modified pyrogenic aluminum oxide or unmodified or surface modified pyrogenic magnesium oxide, unmodified or surface modified pyrogenic silicon oxide particles and mixtures thereof, wherein the metal compound consists of aggregates of primary particles with a number mean primary particle size d50 of 5 nm - 100 nm.

The metal compound of the present invention is selected from the group consisting of unmodified or surface modified pyrogenic oxide particles of aluminum, magnesium, silicon, zirconium, zinc, calcium or tin, preferably the metal compound is selected from the group consisting of unmodified or surface modified pyrogenic aluminum oxide or unmodified or surface modified pyrogenic magnesium oxide or unmodified or surface modified pyrogenic silicon dioxide particles or mixtures thereof, thus is pyrogenically prepared. Even more preferably metal compound is selected from the group consisting of unmodified or surface modified pyrogenic aluminum oxide or unmodified or surface modified pyrogenic magnesium oxide or mixtures thereof.

Pyrogenically is here to be understood as meaning a powder obtainable by flame hydrolysis or flame oxidation (also known as "fume" or "fumed" process). Pyrogenic (fume) processes involve e.g. flame oxidation, flame hydrolysis or flame pyrolysis. Such processes involve oxidizing or hydrolyzing of hydrolysable or oxidizable starting materials, generally in a hydrogen/oxygen flame. The flame spray pyrolysis (FSP) process suitable for preparing the metal compound may comprise the following steps:
1) a solution containing the metal precursor (e.g., the alumina chloride) is atomized, e.g., by means of air or an inert gas, preferably using a multi-substance nozzle, and
2) mixed with a combustion gas, preferably hydrogen and/or methane, and air, and
3) the mixture is allowed to burn in a flame into a reaction chamber surrounded by a casing,
4) the hot gases and the solid products are cooled, and then the solid product is removed from the gases.

Starting materials used for pyrogenic methods include organic and/or inorganic metal compounds, such as metal chlorides, metal nitrates, metal acetates, metal carboxylates. In flame hydrolysis process, for example, metal precursors such as metal chlorides, are usually vaporized and reacted in a flame generated by the reaction of hydrogen and oxygen to form metal compound particles. The thus obtained powders are referred to as "pyrogenic" or "fumed" metal compounds. The reaction initially forms highly disperse primary particles, which in the further course of reaction coalesce to form aggregates, i.e. strongly bound primary particles and agglomerates, i.e. relatively weakly bound aggregates. The aggregate dimensions of these powders are generally in the range of 0.2 µm - 2 µm. Said powders may be partially destructed and converted into the nanometer (nm) range particles, advantageous for the present invention, by suitable grinding.

The metal compound, preferably selected from the group consisting of unmodified or surface modified pyrogenic aluminum oxide or unmodified or surface modified pyrogenic magnesium oxide particles and mixtures thereof, preferably has a specific surface area (BET) of 1 m²/g to 500 m²/g. The thermally untreated metal compound, i.e. the product of the pyrogenic process, wherein no further thermal treatment has been employed, preferably has a BET surface area of 10 m²/g - 450 m²/g, more preferably of 30 m²/g - 400 m²/g, most preferably of 50 - 350 m²/g. The specific surface area, also referred to simply as BET surface area, can be determined according to DIN 9277:2014 by nitrogen adsorption in accordance with the Brunauer-Emmett-Teller method.

The metal compound used in the electrode according to the invention, is in the form of aggregated primary particles with a number mean primary particle size of 5 - 100 nm, preferably 7 - 70 nm, more preferably 10 - 50 nm, as determined by transition electron microscopy (TEM). This numerical mean diameter can be determined by calculating the average size of at least 500 particles analyzed by TEM.

The particles of the metal compound used in the present invention, which is obtained by a pyrogenic process, are usually mostly in the form of aggregates, although some particles can be in the form of non-aggregated primary particles. The metal compound preferably has a number mean aggregate particle size d50 of less than 2 µm, more preferably 20 nm - 1 µm, more preferably 30 nm - 800 nm, more preferably 40 nm - 600 nm, more preferably 50 nm - 500 nm. The number mean particle size d50 can be determined in a suitable dispersion, e.g. in an aqueous dispersion, by dynamic light scattering (DLS) method.

The agglomerates and partly the aggregates can be destroyed e.g. by grinding or ultrasonic treatment of the particles to result in particles with a smaller particle size and a narrower particle size distribution.

Preferably, the number mean aggregate particle diameter d50 of the metal compound is 5 nm - 250 nm, more preferably 10 nm - 200 nm, even more preferably 15 nm - 150 nm, as determined by static light scattering (SLS) after 300 s of ultrasonic treatment at 25 °C of a mixture consisting of 5 % by weight of the particles and 95 % by weight of a 0.5 g/L solution of sodium pyrophosphate in water.

The span (d90-d10)/d50 of particles of the metal compound is preferably 0.4-1.2, more preferably 0.5-1.1, even more preferably 0.6-1.0, as determined by dynamic light scattering (DLS) after 300 s of ultrasonic treatment at 25 °C of a mixture consisting of 5 % by weight of the particles and 95 % by weight of a 0.5 g/L solution of sodium pyrophosphate in water.

Thus, the metal compound present in the electrode of the present invention is preferably characterized by a relatively small number mean aggregate particle size d50 and narrow particle size distribution (d90-d10)/d50. This helps to achieve high-quality metal compound coating of the lithium electrode.

The d values d10, d50 and d90 are commonly used for characterizing the cumulative particle diameter distribution of a given sample. For example, the d10 diameter is the diameter at which 10% of a sample's volume is comprised of smaller than d10 particles, the d50 is the diameter at which 50% of a sample's volume is comprised of smaller than d50 particles. The d50 is also known as the "volume median diameter" as it divides the sample equally by volume; the d90 is the diameter at which 90% of a sample's volume is comprised of smaller than d90 particles.

The tamped density of the metal compound present in the electrode of the invention can be from 20 g/L to 1000 g/L. The thermally untreated metal compound preferably has a tamped density of 20 g/L - 200 g/L, more preferably 25 g/L - 150 g/L, even more preferably 28 g/L - 130 g/L, still more preferably 30 g/L - 120 g/L.

Tamped density of a pulverulent or coarse-grain granular material can be determined according to DIN ISO 787-11:1995 "General methods of test for pigments and extenders -- Part 11: Determination of tamped volume and apparent density after tamping". This involves measuring the apparent density of a bed after agitation and tamping.

An example of a fumed alumina commercially available is the AEROXIDE^{®} Alu 130 from Evonik Operations GmbH.

The pyrogenically produced metal compound (e.g. alumina) is hydrophilic. Through surface modification of the pyrogenically produced metal oxide, a hydrophobic metal oxide is then produced. The surface treatment may include using any of many suitable hydrophobic reagents, such as silanes.

### The surface modified metal compound

The metal compound present in the electrode according to the invention may be surface modified. This surface treatment, particularly a hydrophobic surface treatment may improve the compatibility of metal compound particles with the organic binder and solvent used in coating process.

The metal compound present in the electrode of the invention can be hydrophobic and have a methanol wettability of a methanol content of greater than 5%, preferably of 10% to 80%, more preferably of 15% to 70%, especially preferably of 20% to 65%, most preferably of 25% to 60%, by volume in a methanol/water mixture.

The terms "hydrophobic" or "hydrophobized" in the context of the present invention relate to the particles having a low affinity for polar media such as water. The hydrophilic particles, by contrast, have a high affinity for polar media such as water. The hydrophobicity of the hydrophobic materials can typically be achieved by the application of the appropriate nonpolar groups to the surface of particles. The extent of the hydrophobicity of the metal compound can be determined via parameters including its methanol wettability, as described in detail, for example, in WO2011/076518 A1, pages 5-6. In pure water, hydrophobic particles of a metal compound separate completely from the water and float on the surface thereof without being wetted with the solvent. In pure methanol, by contrast, hydrophobic particles are distributed throughout the solvent volume; the complete wetting takes place. In the measurement of methanol wettability, a maximum methanol content at which there is still no wetting of the metal compound, is determined in a methanol/water test mixture, meaning that 100% of the metal compound used remains separate from the test mixture after contact with the test mixture, in unwetted form. This methanol content in the methanol/water mixture in % by volume is called methanol wettability. The higher the level of such methanol wettability, the more hydrophobic the metal compound. The lower the methanol wettability, the lower the hydrophobicity and the higher the hydrophilicity of the material.

The metal compound of the present invention can be surface modified, e.g. hydrophobized, with a surface treatment agent selected from the group consisting of organosilanes, silazanes, acyclic polysiloxanes, cyclic polysiloxanes, and mixtures thereof. Preferably, as surface modifying agent, the following silanes are employed, either individually or in a mixture: dimethyldichlorosilane, octyltrimethoxysilane, oxtyltriethoxysilane, hexamethyldisilazane, 3 methacryloxypropyltrimethoxysilane, 3 methacryloxypropyltriethoxysilane, hexadecyltrimethoxysilane, hexadecyltriethoxysilane, dimethylpolysiloxane, glycidyloxypropyltrimethoxysilane, glycidyloxypropyltriethoxysilane, nanofluorohexyltrimethoxysilane, tridecafluorooctyltrimethoxysilane, tridecafluorooctyltriethoxysilane, aminopropyltriethoxysilane. Especially preferably, octyltrimethoxysilane and octyltriethoxysilane can be employed.

The hydrophobic metal compound preferably has a carbon content of 0.1% to 15.0%, more preferably of 0.5% to 12.0% by weight, more preferably of 1.0% to 10.0% by weight. The carbon content may be determined by elemental analysis according to EN ISO3262-20:2000 (Chapter 8). The analyzed sample is weighed into a ceramic crucible, provided with combustion additives and heated in an induction furnace under an oxygen flow. The carbon present is oxidized to CO₂. The amount of CO₂ gas is quantified by infrared detectors.

An example of a fumed hydrophobic alumina is the AEROXIDE^{®} Alu C 805 commercially available from Evonik Operations GmbH.

### Anode active material:

In the present invention the inventive anode electrode contains an anode electrode containing at least 7 wt.-% silicon. Carbonaceous materials including crystalline carbon such as natural or artificial graphite in the form of plate-like, flake, spherical or fibrous type graphite; amorphous carbon, such as soft carbon, hard carbon, mesophase pitch carbide, fired coke and the like, or mixtures thereof are used as basis anode active materials. In addition, Si-based particles can be used as anode active materials. Preferred anode active materials are carbon and/or Si-based particles. Si-based particles includes silicon particles (e.g., pure silicon particles), silicon oxide (SiOx) particles, and any combinations of silicon, silicon oxide, and carbon particles including mixtures and composites thereof. Silicon oxide can be SiO and/or SiO2. In an embodiment, the active anode material may be a nanostructured porous silicon material. In an embodiment, the anode material is SiOx where x can vary from 0 to about 2, such as, Si, SiO, SiO2 or any combinations thereof.

Preferred anode active materials are carbon and/or Si-based particles, including a composite material of C and Si-based particles. "Composite material" refers to a composition comprising both carbon material and silicon material. The carbon and silicon material may be a mixture of a carbon powder and a silicon powder of nano sized particles. In an embodiment the composite material may comprise individual particles of carbon and silicon which are chemically bonded. In another embodiment, the composite material may comprise porous, nanosized silicon particles with carbon impregnated within the silicon porous structure.

The active anode material may comprise carbon and/or Si-based particles. In some embodiments, the active anode material may comprise a composite SiOx/C material wherein x can vary from 0 to about 2, made of 60-99 % carbon and 40-1 % silicon oxide, preferably 70-95 % carbon and 30-5 % silicon oxide, and more preferably 80-90 % carbon and 20-10 % silicon oxide. The composite SiOx/C material may be in the form of powder or particles.

In an embodiment, the active anode material may comprise a composite SiO/C material, made of 60-99 % carbon and 40-1 % SiO, preferably 70-95 % carbon and 30-5 % SiO, and more preferably 80-90 % carbon and 20-10 % SiO. The composite SiO/C material may be in the form of powder or particles.

In some embodiments, the active anode material may comprise a composite Si/C material, made of 60-99 % carbon and 40-1 % silicon, preferably 70-95 % carbon and 30-5 % silicon, and more preferably 80-90 % carbon and 20-10 % silicon. The composite Si/C material may be in the form of powder or particles.

### Binder for anode electrode:

The anode electrode of the inventive electrode comprises a binder. The material of the binder is not particularly limited as long as this material allows efficient adhesion between the graphite and/or silicon based particles and the current collector of the anode electrode. The binder can be selected from the group consisting of poly(vinylidene fluoride), copolymer of vinylidene fluoride and hexafluoropropylene, poly(vinyl acetate), polyethylene oxide), poly(methyl methacrylate), poly(ethyl acrylate), poly(vinyl chloride), poly(urethane), poly(acrylonitrile), polyethylene glycol) and polyethylene glycol)-dimethyl ether, polyether amine), copolymer of ethylene and vinyl acetate, carboxyl methyl cellulose, styrene-butadiene-rubber, nitrile butadiene rubber, poly (acrylic acid), lithium substituted poly (acrylic acid), poly(imide), and mixtures thereof.

### Current collector of anode electrode:

For the anode electrode usually a current collector selected from metals such as copper, nickel, stainless steel, nickel-plated steel, or alloys thereof are used. Preferably copper or copper alloys are used. In other words, copper foil is preferably used as the current collector of the anode electrode base material.

Examples of the copper foil include rolled copper foil, electrolytic copper foil, and the like.

As the anode electrode active material, a material that can insert and release lithium ions is usually used.

### The organic binder of the coating layer on the anode electrode

The coating layer of the inventive electrode comprises an organic binder. The material of the organic binder is not particularly limited as long as this material allows efficient adhesion between the metal compound particles and the surface of the lithium layer. The binder can be selected from the group consisting of poly(vinylidene fluoride), copolymer of vinylidene fluoride and hexafluoropropylene, poly(vinyl acetate), polyethylene oxide), poly(methyl methacrylate), poly(ethyl acrylate), poly(vinyl chloride), poly(urethane), poly(acrylonitrile), polyethylene glycol) and polyethylene glycol)-dimethyl ether, polyether amine), copolymer of ethylene and vinyl acetate, carboxyl methyl cellulose, poly (acrylic acid), poly(imide), and mixtures thereof.

### Process for producing anode electrode

The invention further provides a process for producing the inventive electrode, comprising the following steps:
(1) preparing a mixture comprising an organic binder, a metal compound selected from the group consisting of unmodified or surface modified pyrogenic oxide particles of aluminum, magnesium, silicon, zirconium, zinc, calcium or tin, wherein the metal compound consists of aggregates of primary particles with a number mean primary particle size d₅₀ of 5 nm - 100 nm and optionally a solvent, wherein the weight ratio of the metal compound to the organic binder is from 0.1 to 10, preferably from 0.2 to 9.5, more preferably from 0.3 to 9.0, more preferably from 0.4 to 8.5, more preferably from 0.5 to 8.0, more preferably from 0.8 to 7.5, more preferably from 1.0 to 7.0
(2) coating the mixture prepared in step (1) on the surface of an anode electrode containing at least 7 wt.-% silicon;
(3) optional drying and/or curing the coating layer prepared in step (2).

The solvent optionally used in step (1) of the inventive process is not particularly limited, as long as it may dissolve the organic binder. A non-exhaustive list of suitable solvents comprises 1,2-dimethoxyethane, diethyl ether, tetrahydrofuran, dioxane, bis (2-methoxyethyl) ether, pentane, hexane, heptane, octane, decane, toluene, ethanol, isopropanol, N-Methyl-2-pyrrolidone, triethyl phosphate, dimethyl sulfoxide, methyl ethyl ketone, methyl isobutyl ketone, benzaldehyde, N,N-dimethylformamide, dimethylacetamide, acetonitril, cyclohexanone, ethyl acetate, propylene carbonate, ethylene carbonate, diethylene glycol monomethyl ether, triethylene glycol methyl ether, acetylacetone, acetone and the mixtures thereof.

The mixture prepared in step (1) of the process according to the invention can be obtained from two or more mixtures, preferably from two mixtures, for example, the first mixture comprising the metal compound particles and a solvent, the second mixture comprising the organic binder and a solvent.

Preferably, such a first mixture comprises 1% - 70%, preferably 5% - 60%, more preferably 7% - 50%, more preferably 10% - 45%, by weight of the metal compound and 30% - 99%, preferably 40% - 95%, more preferably 50% - 93%, more preferably 55% - 90%, by weight of the solvent.

The second mixture can comprise 0.1% - 90%, preferably 0.5% - 50%, more preferably 1% - 20%, more preferably 2% - 10%, by weight of the organic binder and 10% - 99.9%, preferably 50% - 99.5%, more preferably 80% - 99%, more preferably 90% - 98%, by weight of the solvent.

In step (2) of the inventive process, an anode electrode material containing at least 7 wt.-% silicon is coated with the mixture prepared in step (1) to form a coating layer comprising the metal compound and the organic binder on the surface of the anode electrode material containing at least 7 wt.-% silicon. Any suitable coating method allowing application of a relatively thin coating layer may be applied. An example of a suitable apparat for coating step is doctor blade device SA-202 (manufacturer: Tester Sangyo).

The mixture coated on the anode electrode in step (2), is further optionally dried and/or cured on the surface of the anode electrode in step (3) of the inventive process leading to formation of the inventive coated anode electrode.

Curing of the coating mixture can occur, for example by polymerization, crosslinking reaction or another type of chemical reaction or by physical curing by evaporation of the solvents or other volatile components of the binder. Chemical curing can take place, for example, thermally or under the action of UV radiation or other radiation.

Depending on the system used, step (3) can preferably take place at a temperature of from 0°C to 500°C, more preferably from 5°C to 400°C, more preferably from 10°C to 300°C, more preferably from 20°C to 150°C. The drying/curing step can take place in the presence of air or preferably with exclusion of oxygen, for example under a protective-gas atmosphere of nitrogen or argon. Said step can take place under standard pressure or under a reduced pressure, for example under vacuum.

### Secondary battery (non-aqueous electrolyte storage system)/Lithium-lon Battery

A secondary battery (non-aqueous electrolyte storage element) according to an embodiment of the present invention includes a cathode electrode, an anode electrode, and a non-aqueous electrolyte. The above-mentioned cathode electrode and anode electrode usually form an electrode body that is laminated or wound with a separator interposed in between. This electrode body is housed in a case, and this case is filled with the above-mentioned non-aqueous electrolyte. The non-aqueous electrolyte is interposed between the cathode electrode and the anode electrode. Further, as the case, a known metal case, resin case, etc. that are commonly used as a case for a secondary battery can be used.

Preferably, the invention provides a lithium-ion battery comprising the inventive anode electrode or the inventive anode electrode obtainable by the process according to the invention.

The lithium-ion battery of the invention, apart from the anode electrode, may also comprise a cathode, optionally a separator and an electrolyte comprising, for example, a lithium salt or a lithium compound.

### Cathode electrode

The cathode electrode active material layer is formed from a so-called cathode electrode composite material containing a cathode electrode active material.

Further, the cathode electrode composite material forming the cathode electrode active material layer contains optional components such as a conductive material, a binder, a thickener, and a filler, as necessary.

The cathode of the lithium-ion battery may comprise any suitable material, commonly used in the secondary lithium-ion batteries, capable of reversible intercalating/deintercalating lithium ions. The cathode material used with preference in the process according to the invention is selected from the group consisting of lithium-cobalt oxide, lithium-manganese oxide, lithium-nickel-cobalt oxides, lithium-nickel-manganese-cobalt oxides, lithium-nickel-cobalt-aluminum oxides, lithium-nickel-manganese oxides, and a mixture thereof.

Examples of the cathode electrode active material include complex oxides represented by formulas LiₓMO_{y} (M represents at least one type of transition metal), LiₓNi_{α}Mn_{β}Co_{(1-α-β)}O₂, LiₓMn₂O₄ having a spinel crystal structure, LiₓNi_{α}Co_{(1-α)} having a layered α-NaFeO₂ type crystal structure, LiₓNi_{α}Mn_{(2-α)}O₄ or Li_{w}Meₓ(XO_{y})_{z} (Me represents at least one kind of transition metal, X is, for example P, Si, B, V. Examples of such materials include but are not limited to LiₓCoO₂, LiₓNiO₂, LiₓMnO₃, LiFePO₄, LiMnPO₄, LiNiPO₄, LiCoPO₄, Li₃V₂(PO₄)₃, Li₂MnSiO₄or Li₂CoPO₄F.

The elements or polyanions in these compounds may be partially substituted with other elements or anion species.

In the cathode electrode active material layer, one type of these compounds may be used alone, or two or more types may be used in combination.

### Separator:

As the material of the separator, for example, woven fabric, nonwoven fabric, porous polymer film, etc. are used. Among these, porous polymer films are preferred. From the viewpoint of strength, polyolefins such as polyethylene and polypropylene are preferred as the main component of the porous polymer film. Alternatively, a porous polymer film made of a composite of these polymers and a polymer such as aramid or polyimide may be used.

### Non-aqueous Electrolyte:

The electrolyte of the lithium-ion battery can be in the liquid, gel or solid form. The liquid electrolyte of the lithium-ion battery may comprise any suitable organic solvent commonly used in the lithium-ion batteries, such as anhydrous ethylene carbonate (EC), dimethyl carbonate (DMC), propylene carbonate, methylethyl carbonate, diethyl carbonate, gamma butyrolactone, dimethoxyethane, fluoroethylene carbonate, vinylethylene carbonate, and a mixture thereof. The gel electrolytes include gelled polymers. Any suitable gelled polymers may be used.

The solid electrolyte of the lithium-ion battery may comprise oxides, e.g., lithium metal oxides, sulfides, phosphates, or solid polymers.

The lithium salt may be selected from the group consisting of lithium hexafluorophosphate (LiPF₆), lithium bis 2 (trifluoromethylsulfonyl)imide (LiTFSI), lithium bis (fluorosulfonyl) imide (LiFSI), lithium perchlorate (LiClO₄), lithium tetrafluoroborate (LiBF₄), Li₂SiF₆, lithium triflate, Lithium bis(perfluoroethylsulfonyl)imide (LiN(SO₂CF₂CF₃)₂), lithium nitrate, lithium bis(oxalate)borate, lithium-cyclo-difluoromethane-1,1-bis(sulfonyl)imide, lithium-cyclo-hexafluoropropane-1,1-bis(sulfonyl)imide and mixtures thereof. Lithium hexafluorophosphate (LiPF6) may be preferably used as main lithium salt in the coating layer in batteries.

Even without further explanations, it is assumed that a person skilled in the art can fully use the above description. The preferred embodiments and examples are therefore to be understood only as a descriptive, by no means as a limiting in any way. In the following, the present invention is explained in more detail using examples. Alternative embodiments of the present invention are available in an analogous manner.

### Examples

Materials:
- AEROXIDE^{®} Alu 130: a very fine-particle fumed aluminum oxide with a very high specific surface area commercially available from Evonik Operations GmbH.
- Alu 130 805 is AEROXIDE ^{®} Alu 130 as alumina, further surface modified with Dynasylan^{®} OCTMO (octyltrimethoxysilane) with BET surface area of 100-130 m²/g
- VP MgO is fumed magnesium oxide particles with BET of 246 m²/g that is produced by flame spray pyrolysis.
- Copper foil: supplied by Chang Chun Group, the thickness of copper foil is 15µm. The grade:

### BFR-F

- Carbon black: Super-P by TAIMAX
- LiPAA: 3.3 wt.% aqueous solution, prepared via the neutralization of poly(acrylic acid) (Sigma-Aldrich, average Mv 450,000) by 1 M LiOH (J.T.Baker) solution to pH ca. 7
- PVDF: ARKEMA, Kynar HSV900 Powder, Lot#: 17J6201
- DMAc: 99.8% purity of dimethylacetamide purchased by Sigma Aldrich
- Si@Gr: 10 wt.% Silicon particles are coated on surface of 90 wt.% graphite as anode active material which was provided by Battery LaFactory Braunschweig (BLB), Technische Universitaet Braunschweig

VP MgO is produced by the following process.

An amount of 8,0 Kilogram of an aqueous solution containing 480 g of magnesium nitrate (Mg(NO3)2 · 6H2O) was prepared. An aerosol of 2.5 kg/h of this dispersion and 15 Nm³/h of air was formed via a two-component nozzle and sprayed into a tubular reaction with a burning flame. The burning gases of the flame consisted of 16 Nm³/h of hydrogen and 30 Nm³/h of air. Additionally, 25 Nm³/h of secondary air was used. After the reactor, the reaction gases were cooled down and filtered.

Alu 130 805 is produced by the following process.

300 g of pyrogenically prepared aluminum oxide particles as AEROXIDE^{®} Alu 130 are placed in a mixer and sprayed with 48 g octyltrimethoxysilane (C₁₁H₂₆O₃Si). After the spraying of the silane on the powder is finished, mixing is continued for additional 5 min. Then tempering of the wetted powder is carried out for 3 h at 130 °C in an oven.

**Table 1. Physical properties of the tested metal compound particles**

| Metal compounds | BET [m²/g] | Surface modification |
|---|---|---|
| AEROXIDE^{®} Alu 130 | 130 | No |
| Alu 130 805 | 105 | With Dynasylan^{®} OCTMO |
| VP MgO | 246 | No |

### Comparative Example 1: Preparation of anode electrode

The anode electrode was made by spreading the pre-mixed slurry onto the copper foil. The slurry consists of 90 wt.% anode active material (Si@Gr), 4 wt.% carbon black (Super P), and 6 wt.% LiPAA. The hand-grinding approach was taken as the process for mixing slurry. Anode active material and Super P were thoroughly mixed for the first 15 minutes, and the aqueous binder solution with 3.3 wt.% binder was added to the powder and stirred for the next 20 minutes to form an uniform slurry. The dispersed slurry was then spread onto Cu foil by a coating machine with a 150 µm-gap scraper and dried at 70 °C ambient. The dried electrode then underwent calendering by a rolling machine to achieve a 30% thickness reduction to increase its compact density. After calendering, the electrode sheet was cut into circles with 13 mm in diameter. Further drying was conducted at 100°C in a vacuum oven for 12.5 hours to remove the residual solvent. The density of the electrode is 0.84 g/cm3 and the corresponding areal capacity is 2.0 mAh/cm2.

### Coating layer

2wt.% PVDF solution in DMAc is prepared by dissolving PVDF in DMAc. Metallic oxide nanoparticles were dispersed in the PVDF solution by ball-milling with 1mm diameter ZrOz balls at 250 rpm with 15 cycles for 10 minutes rotation and 2 minutes rest. After ball-milling, it is crucial to proceed to electrode coating immediately in case of nanoparticle aggregation. The electrodes to be coated were placed in a 20 ml vial bottle, and for each bottle, 3 ml of coating solution was added. Next, the coating process took place in a vacuum chamber connected to a pump to perform negative pressure for 30 minutes. After soaking, the excess solution would then be removed by capillary action with clean tissue contacted to the edge, then the electrodes were dried on a hot plate for 20 minutes. Once the surface was dried, the back of the electrode was cleaned with ethanol and cotton swabs. Further, drying took place at 65°C in a vacuum oven for 12.5 hours to remove the residual solvent.

Two different weight ratios of oxides to PVDF have been conducted, including 0.25 and 0.5 (named hereafter 2x-).

### Comparative example 2: Anode electrode with PVDF (polymer) coating

The same process as described in Comparative example 1 with the difference that PVDF polymer layer is coated onto Si/Gr electrode in addition after preparing anode electrode. The PVDF solution is prepared by dissolving 2 wt.% PVDF in DMAc. The electrodes to be coated were placed in a 20 ml vial bottle, and for each bottle, 3 ml of coating solution was added. Next, the coating process took place in a vacuum chamber connected to a pump to perform negative pressure for 30 minutes. After soaking, the excess solution would then be removed by capillary action with clean tissue contacted to the edge, then the electrodes were dried on a hot plate for 20 minutes. Once the surface was dried, the back of the electrode was cleaned with ethanol and cotton swabs. Further, drying took place at 65°C in a vacuum oven for 12.5 hours to remove the residual solvent.

### Example 1: Anode electrode with composite protective layer of magnesium oxide, VP MgO

The same process as described in Comparative example 2 is used, with the difference that a mixture of PVDF polymer and VP MgO as nanostructured magnesium oxide particles with the weight ratio of 4:1 is prepared by a ball milling process.

VP MgO as metallic oxide nanoparticles were dispersed in the 2 wt.% PVDF solution and then ball-milled. The parameters for ball-milling are shown in Table 2.

The coating process of the mixture of metallic oxide nanoparticles and PDVF dispersion is followed by the same process as Comparative example 2.

**Table 2 Parameter of ball milling process**

| Solution | Zr balls | Rotation speed | Program | Cycle |
|---|---|---|---|---|
| 10 ml | 1 mm diameter, 2.6 g total amount | 250 rpm | 10 min rotation/ 2 min rest | 15 |

### Example 2: Anode electrode with composite protective layer of aluminum oxide, AEROXIDE^{®} Alu 130

The same process as described in Example 1 with the only difference that as metal oxide particles AEROXIDE^{®} Alu 130 was used instead of VP MgO.

### Example 3: Anode electrode with composite protective layer of surface-modified aluminum oxide Alu 130 805

The same process as described in Example 1 with the only difference that as metal oxide particles Alu 130 805 was used instead of VP MgO.

### Example 4: Anode electrode with composite protective layer of magnesium oxide VP MgO with high metal oxide content

The same process as described in Example 1 with the only difference that the weight ratio between VP MgO and PVDF is 2:1 instead of 4:1.

### Example 5: Anode electrode with composite protective layer of aluminum oxide, AEROXIDE^{®} Alu 130 with high metal oxide content

The same process as described in Example 2 with the only difference that the weight ratio between AEROXIDE^{®} Alu 130 and PVDF is 2:1 instead of 4:1

### Example 6: Anode electrode with composite protective layer of surface-modified aluminum oxide with high metal oxide content

The same process as described in Example 3 with the only difference that the weight ratio between Alu 130 805 and PVDF is 2:1 instead of 4:1

### Electrochemical characterization:

CR2032-type coin cells were utilized to test electrochemical performance of the examples. The electrolyte is composed of 1M LiPF₆ in ethylene carbonate (EC) / diethyl carbonate (DEC) (1:2 in vol.) with 2 wt.% VC, and additional 10 wt.% of FEC was added. Li half cells were assembled in a glove box filled with argon. The separator is provided by Asahi Kasei, type of ND420. The charging and discharging protocol consisted of a constant current discharge followed by a constant voltage discharge until the current was reduced to 1/10 of the original set current, and then a constant current charge to 1.5V for a cycle. The cells were subjected to two cycles of formation at 0.1 C before each test.

After the formation of Li half cells, long cycle tests are performed with following conditions;
- C-rate: 0.3C charge and discharge
- Discharge: constant current (CC) to 1 mV, then constant voltage (CV) mode to 0.03V.
- Charge: CV to 1.5V
- Cycle: to roll-over

Table 3 summarizes the obtained results.

**Table 3**

| Metal compounds | Cycle number that specific capacity of Li half cell reached 400 mAh/g |
|---|---|
| Comparative example 1 | 336 |
| Comparative example 2 | 416 |
| Example 1 | 412 |
| Example 2 | 374 |
| Example 3 | 374 |
| Example 4 | 554 |
| Example 5 | 437 |
| Example 6 | 665 |

The coated electrode sheets of example 6 showed most stable cycle performance with more than 7% Si containing anode electrode. By increasing metal oxide content as well as providing surface modification of nanostructured particles results in a long cycle life of high capacity of anode electrode. In addition, high content of magnesium oxide in the protective layer improved cycle performance of Li ion battery.

Although the invention has been described in reference to specific embodiments, it is noted that the embodiments are provided are not intended to limit the scope of the invention and that many other variations of the described embodiments and, also other embodiments of the invention may be envisioned by the skilled person after having read the present disclosure which do not depart from the scope of the invention as defined in the appended claims.

## Claims

1. An anode electrode for a lithium ion battery, containing an anode electrode containing at least 7 wt.-% silicon, and a coating layer comprising 5-80 wt.% of an organic binder and 20-95 wt.% of a metal compound selected from the group consisting of unmodified or surface modified pyrogenic oxide particles of aluminum, magnesium, silicon, zirconium, zinc, calcium or tin, wherein the metal compound consists of aggregates of primary particles with a number mean primary particle size of 5 nm - 100 nm, as determined by transition electron microscopy (TEM).

2. The anode electrode according to claim 1, **characterized in that** the metal compound has a specific surface area (BET) of 1 m²/g to 500 m²/g, as determined according to DIN 9277:2014.

3. The anode electrode according to claim 1 or 2, **characterized in that** the metal compound has a number mean aggregate particle size d50 of less than 2 µm, more preferably 20 nm - 1 µm, more preferably 30 nm - 800 nm, more preferably 40 nm - 600 nm, more preferably 50 nm - 500 nm, as determined in a by dynamic light scattering (DLS) method.

4. The anode electrode according to one or more of claims 1 to 3, **characterized in that** the metal compound is surface modified with a surface treatment agent selected from the group consisting of organosilanes, silazanes, acyclic polysiloxanes, cyclic polysiloxanes, and mixtures thereof.

5. The anode electrode according to one or more of claims 1 to 4, **characterized in that** the metal compound is selected from the group consisting of unmodified or surface modified pyrogenic aluminum oxide, unmodified or surface modified pyrogenic magnesium oxide or unmodified or surface modified pyrogenic silicon dioxide particles or mixtures thereof.

6. The anode electrode according to one or more of claims 1 to 5, **characterized in that** the binder is selected from the group consisting of poly(vinylidene fluoride), copolymer of vinylidene fluoride and hexafluoropropylene, poly(vinyl acetate), polyethylene oxide), poly(methyl methacrylate), poly(ethyl acrylate), poly(vinyl chloride), poly(urethane), poly(acrylonitrile), polyethylene glycol) and poly(ethylene glycol)-dimethyl ether, poly(ether amine), copolymer of ethylene and vinyl acetate, carboxyl methyl cellulose, styrene-butadiene-rubber, nitrile butadiene rubber, poly (acrylic acid), lithium substituted poly (acrylic acid), poly(imide), and mixtures thereof.

7. A Process for producing an anode electrode according to claim, comprising the following steps:
(1) preparing a mixture comprising an organic binder, a metal compound selected from the group consisting of unmodified or surface modified pyrogenic oxide particles of aluminum, magnesium, silicon, zirconium, zinc, calcium or tin, wherein the metal compound consists of aggregates of primary particles with a number mean primary particle size d₅₀ of 5 nm - 100 nm and optionally a solvent, wherein the weight ratio of the metal compound to the organic binder is from 0.1 to 10,
(2) coating the mixture prepared in step (1) on the surface of an anode electrode containing at least 7 wt.-% silicon;
(3) optional drying and/or curing the coating layer prepared in step (2).

8. The process according to claim 7, **characterized in that** the mixture prepared in step (1) is obtained from two mixtures, the first mixture comprising the metal compound particles and a solvent, the second mixture comprising the organic binder and a solvent.

9. The process according to claim 7 or 8, **characterized in that** step (3) takes place at a temperature of from 0°C to 500°C.

10. A lithium-ion battery comprising the anode electrode according to claim 1.

11. The lithium-ion battery according to claim 10, **characterized in that** it, apart from the anode electrode, also comprises a cathode, optionally a separator and an electrolyte comprising a lithium salt or a lithium compound.
